(19) **Europäisches Patentamt**

**European Patent Office**

**Office européen des brevets**

(11) **EP 1 215 071 B1**

(12) **EUROPEAN PATENT SPECIFICATION**

(45) Date of publication and mention
of the grant of the patent:
**07.09.2005 Bulletin 2005/36**

(51) Int Cl.7: **B60K 31/04**

(21) Application number: **01128714.1**

(22) Date of filing: **03.12.2001**

(54) **Method for estimating a road load force encountered by a vehicle**

Methode zur Bestimmung einer Fahrwiderstandskraft die einem Fahrzeug entgegenwirkt

Méthode pour la détermination de la résistance au roulement d'un véhicule

(84) Designated Contracting States:
**DE FR**

(30) Priority: **18.12.2000 LU 90706**

(43) Date of publication of application:
**19.06.2002 Bulletin 2002/25**

(73) Proprietor: **Delphi Technologies, Inc.
Troy, MI 48007 (US)**

(72) Inventor: **Chan, Eric A.
London, W2 5DP (GB)**

(74) Representative: **Beissel, Jean et al
Office Ernest T. Freylinger S.A.,
234, route d'Arlon,
B.P. 48
8001 Strassen (LU)**

(56) References cited:
**DE-A- 3 416 812          DE-A- 19 626 990
US-A- 4 911 259          US-A- 5 390 119**

# Description

## *Field of the invention*

The present invention generally relates to a method for estimating a road load force encountered by a vehicle.

## *Background of the invention*

In a permanent quest for improvement of vehicle comfort, performance, safety and driveability, manufacturers in the automotive industry tend to integrate more and more information in onboard control units. An interesting information is the road load force encountered by a vehicle, which is the force that is to be overcome by the powertrain to maintain the current vehicle speed.

A general equation of the road load force, noted $F_{RL}$, is the following:

$$F_{RL} = a_0 + a_1 \cdot V + a_2 \cdot V^2$$

The letter $V$ represents the vehicle speed and $a_0$, $a_1$ and $a_2$ are three different constants:

- constant $a_0$ comes mostly from the rolling resistance of the tires and friction in the vehicle's components, like drag from the brake pads, or friction in the wheel bearings, and also incorporates the force of gravity when ascending or descending a slope;

- constant $a_1$ generally comes from frictional losses and from the power used by the various pumps in the vehicle; and

- constant $a_2$ comes mostly from things that affect aerodynamic drag like the frontal area, drag coefficient and density of the air.

Thus, the road load represents a number of forces acting on the vehicle in the direction of motion, which are both internal and external to the vehicle. This information may be valuable for controlling the vehicle, if it could be estimated by an onboard control unit.

US patent US 4,911,259 discloses a method for running control (i.e. cruise control) of a vehicle, wherein a calculated road load value is used in order to optimize a feedback loop of the cruise control system. The road load value is calculated by a simple formula based on the vehicle speed and the vehicle acceleration.

## *Object of the invention*

Hence, there is a need for a method for estimating the road load force encountered by a vehicle.

This is solved by a method as claimed in claim 1.

## *Summary of the invention*

According to the invention, a method for estimating the road load force encountered by a vehicle is proposed. In the method according to the invention, a vehicle speed $V$, a vehicle acceleration $A_V$ and a vehicle driving force $F_D$, representing the effort to maintain the vehicle speed $V$, are firstly determined.

Then, the road load force $F_{RL}$ is calculated according to: $F_{RL} = a_0 + a_1 \cdot V + a_2 \cdot V^2$, wherein $a_0$, $a_1$ and $a_2$ are stored constants.

Subsequently, a calculated acceleration $A_C$ is calculated according to $A_C = (F_D - F_{RL})/m$, wherein $m$ is a stored constant representative of the vehicle mass.

Then, the calculated acceleration $A_C$ is compared with the vehicle acceleration $A_V$, and in case $A_V$ and $A_C$ do not match, one of the stored constants is updated in such a way as to at least partially reduce the difference between $A_C$ and $A_V$. It shall be appreciated that the selection of the one stored constant to be updated is based on a comparison between the calculated acceleration $A_C$ and the vehicle acceleration $A_V$ as well as on a driving condition. The driving condition, as will be explained later, defines acceleration or deceleration criteria, as well as vehicle speed criteria. As a matter of fact, in the method of the invention, the updated constant is the one that is more likely to predominate in the given driving condition. As a result, the road load equation provides an estimated road load force representative of the actual road load of the vehicle.

The term "match" should be understood in such a way that when it is said that "$A_C$ matches $A_V$", the value of $A_C$ equals that of $A_V$ within a certain range.

The method of the invention is an iterative method, which should preferably be repeated several times per second within an onboard control unit. At each repetition, only one of the four constants $a_0$, $a_1$, $a_2$ and $m$ is updated. As the number of iterations increase, the estimated road load force becomes more and more precise. Updating the vehicle mass $m$ permits to avoid confusing a mass variation with a road load variation, and leads to the knowledge of the actual vehicle mass. Indeed, the vehicle mass may change, depending on the number of passengers and whether a caravan is tug by the vehicle.

The amount of variation per repetition of each stored constant is advantageously limited to a certain range, so as to avoid a too large variation of their values between two consecutive repetitions. Therefore, after the update of the selected stored constant, the difference between $A_C$ and $A_V$ may only be partially reduced.

Preferably, the stored constant to be updated is determined as follows.

When the driving condition is such that the vehicle is driving at an essentially constant speed and the vehicle speed $V$ is inferior to a first threshold speed, then if the calculated acceleration $A_C$ is superior to the vehicle acceleration $A_V$, the stored constant $a_0$ is increased. Otherwise the stored constant $a_0$ is decreased. A variation of $a_0$ is attributed to a change in road slope, and the road slope angle may thus be calculated based on the difference between the updated $a_0$ value and a value of $a_0$ determined e.g. on a flat road (such as e.g. a preset factory value).

When the driving condition is such that the vehicle is driving at an essentially constant speed and the vehicle speed $V$ is superior or equal to the first threshold speed, then if the calculated acceleration $A_C$ is superior to the vehicle acceleration $A_V$, the stored constant $a_2$ is increased. Otherwise the stored constant $a_2$ is decreased. From the estimated value of $a_2$, an aerodynamic drag value can be calculated.

It shall be noted that the first threshold speed may advantageously be made dependent on engine speed, thereby improving the accuracy of the method.

Now, when the driving condition is such that the vehicle is accelerating or decelerating and the vehicle speed $V$ is inferior to a second threshold speed, then if the absolute value of the calculated acceleration $A_C$ is superior to the absolute value of the vehicle acceleration $A_V$, the stored constant $m$ is increased. Otherwise the stored constant $m$ is decreased.

When the driving condition is such that the vehicle is accelerating or decelerating and the vehicle speed $V$ is superior or equal to the second threshold speed, then if the absolute value of the calculated acceleration $A_C$ is superior to the absolute value of the vehicle acceleration $A_V$, the stored constant $a_1$ is increased. Otherwise the stored constant $a_1$ is decreased. Friction resistance values can be calculated from the estimated value of $a_1$.

It shall be noted that the second threshold speed may be advantageously made dependent on engine speed and/or on the acceleration or deceleration condition of the vehicle, in order to improve the accuracy of the method.

In a preferred embodiment of the method of the invention, one of the stored constants is also updated when $A_C$ matches $A_V$. In other words, the method leads to an update of one of the stored constants at each repetition of the method, based on a comparison between $A_C$ and $A_V$ and on the driving condition.

As a result, the method of the invention provides a relevant estimation of the road load force, but also provides its equation and an estimation of the vehicle mass. From the constants $a_0$, $a_1$ and $a_2$ it is possible to calculate road slope, frictional resistance and aerodynamic drag values. All this information is thus available for controlling the vehicle. The method of the invention can thus be advantageously used in methods for controlling the powertrain system, i.e. engine and transmission, of an internal combustion engine vehicle. It can also be used in the control of the powertrain system of hybrid or electric vehicles.

By implementing the method of the invention within a powertrain control unit, it is thus possible to determine the road slope angle. It is thus possible to know, without slope sensor, if the vehicle is driving uphill or downhill. Such an indication could be used in vehicles with controllable transmission (e.g. robotized manual, automatic, Continuously Varying Transmission) for adapting gear shift points or selected gear ratio to improve driveability feel; for delaying the upshift when driving downhill to obtain engine braking, which improves the subjective feel of the vehicle, reduces brake fade and improves fuel economy; and for delaying upshift when driving uphill to improve vehicle performance feel and responsiveness. An indication of slope angle could also be used in hybrid vehicles to determine the split in energy requirement from the combustion engine and the electric motor, for the optimization of the regenerative braking, and for deciding if the combustion engine is to be switched on or off. Moreover, in electric vehicles, an indication of the road slope angle may be useful for estimating the amount of energy and the vehicle range remaining in the energy storage system, and for optimizing the regenerative braking.

### Brief description of the drawings

The present invention will now be described, by way of example, with reference to the accompanying drawing, in which:

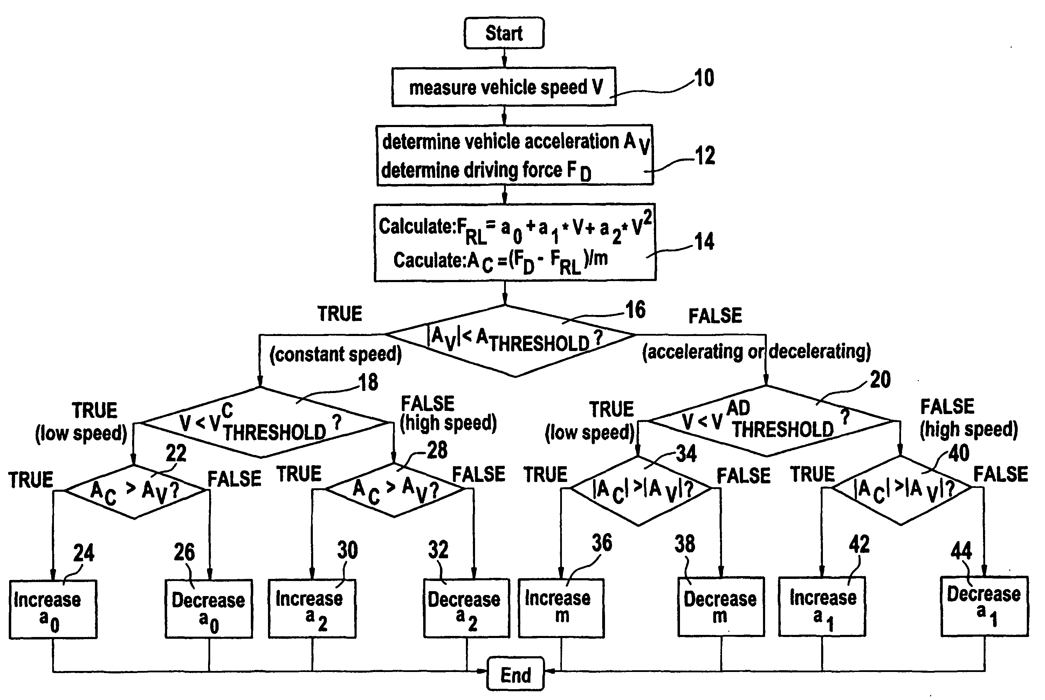

Fig.1:    is a flowchart depicting a preferred embodiment of a method for estimating the road load force encountered by a vehicle in accordance with the invention.

### Detailed description of a preferred embodiment

Fig.1 shows a flowchart depicting a preferred embodiment of a method for estimating the road load force encountered by a vehicle in accordance with the invention. In this preferred embodiment, the method of the invention is implemented in a powertrain control unit of an internal combustion engine. The first step of the method, in box 10, consists in determining the vehicle speed $V$, which can be easily measured by means of a speed sensor. Then, a vehicle acceleration $A_V$ and a driving force $F_D$ are determined, as indicated in box 12. The vehicle acceleration is preferably calculated on the basis of the rate of change of the vehicle speed $V$, and can therefore be considered as a measured value of the vehicle acceleration. If the vehicle is accelerating, the acceleration will be positive, if it is decelerating, the acceleration will be negative. The driving force, representative of the force exerted by the vehicle powertrain, is computed based on engine torque, gear ratio and wheel diameter. It is clear that the way and the order in which $V$, $A_V$ and $F_D$ are determined is not important, as long as their values can be provided at the next step, indicated in box 14.

In box 14, the road load force $F_{RL}$ is firstly calculated according to the formula: $F_{RL} = a_0 + a_1 \cdot V + a_2 \cdot V^2$, wherein $a_0$, $a_1$ and $a_2$ are stored constants. Then a calculated acceleration $A_C$ is calculated according to $A_C = (F_D - F_{RL})/m$, where $m$ is a stored constant representing the vehicle mass. By the term "stored constant", it is meant that the values of these constants are stored in a memory of the powertrain control unit, preferably in a non-volatile memory. When the engine is turned on by means of the ignition key, the powertrain control unit checks if the non-volatile memory has been corrupted. If not, the constants $a_0$, $a_1$, $a_2$ and $m$ are read from the memory for use in the calculations. If the memory was corrupted, the constants are initialized to factory values.

It is clear that, if the estimated road load force and the vehicle mass were correct, then the calculated acceleration $A_C$ should equal the vehicle acceleration $A_V$. However, in case of discrepancy between $A_C$ and $A_V$, something must be corrected. It shall be appreciated that, in order to obtain a good estimation of the road load force encountered by the vehicle, one of $a_0$, $a_1$, $a_2$ and $m$ is updated. The selection of the constant to be updated and the way it has to be updated is based on a comparison between $A_C$ and $A_V$ and on a driving condition. Every time a constant is updated, its updated value is preferably saved in the non-volatile memory. It shall be noted that in this preferred embodiment, an update of one of the stored constants is carried out even if $A_C$ matches $A_V$. Therefore, after box 14 there is no test to see if $A_C$ matches $A_V$, and the method directly continues with the determination of the driving condition.

The determination of the driving condition begins in decision box 16, in which the absolute value of the vehicle acceleration $A_V$ is compared with an acceleration threshold. This test aims to determine if the vehicle is driving at an essentially constant speed, or if it is accelerating or decelerating. If $|A_V|$ is inferior to $A_{THRESHOLD}$ then the vehicle is considered as driving at constant speed. On the contrary, if $|A_V|$ is superior or equal to $A_{THRESHOLD}$ then the vehicle is either accelerating or decelerating. In both cases, the next step is a test on the vehicle speed, either in decision box 18 or in decision box 20.

When the vehicle is driving at a constant speed, the test of decision box 18 aims at precising the driving condition, by comparing the vehicle speed with a first threshold speed, noted $V^C_{THRESHOLD}$, which stands for speed threshold at constant speed. If $V < V^C_{THRESHOLD}$, the vehicle is at low speed, otherwise, it is considered as driving at high speed. The test of decision box 20 is similar to that of decision box 18, the difference being that the vehicle speed is compared with a second threshold speed, noted $V^{AD}_{THRESHOLD}$, which stands for speed threshold for acceleration or deceleration.

These tests carried out in decision boxes 18 and 20 finish off the determination of the driving condition. The following steps are then, in each driving condition, to compare $A_C$ with $A_V$ and to update the stored constant considered as relevant to the driving condition, so as to reduce at least partially the difference between $A_C$ and $A_V$.

When the driving condition is such that the vehicle is driving at constant and low speed, the relevant stored constant is $a_0$. Therefore, according to decision box 22, if the calculated acceleration $A_C$ is greater than the vehicle acceleration $A_V$, then $a_0$ is to be increased. The value of $a_0$ is thus increased, see box 24, in such a way that the difference between $A_C$ and $A_V$ is reduced, at least partially. Otherwise (result of decision box 22 is "False"), the value of $a_0$ is decreased (box 26), also in order to reduce the difference between $A_C$ and $A_V$. Preferably, the amount of variation of $a_0$ per repetition is limited to a certain range so as to avoid a too large variation of $a_0$ between two repetitions. The range of variation of the other stored constants is preferably also limited.

When the driving condition is such that the vehicle is driving at constant and high speed, the relevant stored constant is $a_2$. Therefore, as prescribed by decision box 28, if $A_C > A_V$, then $a_2$ is increased (box 30). Otherwise $a_2$ is decreased (box 32).

Now, when the driving condition is such that the vehicle is accelerating or decelerating and driving at low speed, the relevant stored constant is $m$. Therefore, according to decision box 34, if the calculated acceleration $A_C$, in absolute value, is greater than the vehicle acceleration $A_V$, in absolute value, the vehicle mass $m$ is increased (box 36). Otherwise, the vehicle mass $m$ is decreased (box 38).

When the driving condition is such that the vehicle is accelerating or decelerating and driving at high speed, the relevant stored constant is $a_1$. Therefore, according to decision box 40, if $|A_C| > |A_V|$ then $a_1$ is increased (box 42). Otherwise, $a_1$ is decreased, as in box 44.

The present method thus allows to estimate the road load force but also takes into account the mass of the vehicle, thereby avoiding confusion between a variation in mass and in road load. This method will be preferably repeated a few times per seconds in the powertrain control unit. Moreover, as already explained, the stored constants come from different effects on the vehicle, and it is possible to make some further estimations from the values of the stored constants. Indeed, the angle of the road slope may be calculated from $a_0$, frictional losses may be calculated from $a_1$, aerodynamic drag may be calculated from $a_2$, and the mass actual of the vehicle is known from $m$. It is clear that these values could be updated at each repetition of the method, however it is sufficient to calculate the value derived from a constant that has changed.

It may be noted that, as one of the constants $a_0$, $a_1$, $a_2$ and $m$ is updated at every repetition, it may happen that the amount that is added to, or subtracted from, the relevant constant is very small, in particular when $A_C$ is very close to $A_V$.

Referring more specifically to the constant $a0$, the present method attributes a variation of constant $a_0$ to a variation in road slope. This can be formulated as follows: $a_{0adapted} = a_{0base} + K \cdot sin\vartheta$.

The constant $a_{0adapted}$ is the updated value of $a_0$, $a_{0base}$ is the factory value of $a_0$, $K$ is a constant including the weight of the vehicle ($m \cdot g$) and $\vartheta$ is the angle of the road slope. The angle $\vartheta$ will be positive for an ascending slope and negative for a descending slope.

**Claims**

1. A method for estimating a road load force encountered by a vehicle, the method comprising the step of
   determining a vehicle speed $V$, a vehicle acceleration $A_V$ and a vehicle driving force $F_D$;
   said method being **characterized by** the steps:

   calculating the road load force $F_{RL}$ according to $F_{RL} = a_0+a_1 \cdot V+a_2 \cdot V^2$, wherein $a_0$, $a_1$ and $a_2$ are stored constants;
   computing a calculated acceleration $A_C$ according to $A_C = (F_D-F_{RL})/m$, wherein $m$ is a stored constant representative of the vehicle mass; and
   comparing $A_V$ with $A_C$ and, in case $A_V$ and $A_C$ do not match, updating one of the stored constants in such a way as to at least partially reduce the difference between $A_C$ and $A_V$, the stored constant to be updated depending on a driving condition.

2. The method according to claim 1, wherein one of the stored constants is also updated when $A_C$ matches $A_V$.

3. The method according to claim 1 or 2, wherein when the driving condition is such that the vehicle is driving at an essentially constant speed and the vehicle speed $V$ is inferior to a first threshold speed, then if the calculated acceleration $A_C$ is superior to the vehicle acceleration $A_V$ then the stored constant $a_0$ is increased, otherwise the stored constant $a_0$ is decreased.

4. The method according to claim 3, wherein an angle of road slope is calculated based on a variation of $a_0$.

5. The method according to claim 3 or 4, wherein when the driving condition is such that the vehicle is driving at an essentially constant speed and the vehicle speed $V$ is superior or equal to the first threshold speed, then if the calculated acceleration $A_C$ is superior to the vehicle acceleration $A_V$ then the stored constant $a_2$ is increased, otherwise the stored constant $a_2$ is decreased.

6. The method according to claim 5, wherein an aerodynamic drag value is calculated from $a_2$.

7. The method according to anyone of claims 3 to 6, wherein the first threshold speed depends on engine speed.

8. The method according to anyone of the preceding claims, wherein when the driving condition is such that the vehicle is accelerating or decelerating and the vehicle speed $V$ is inferior to a second threshold speed, then if the absolute value of the calculated acceleration $A_C$ is superior to the absolute value of the vehicle acceleration $A_V$ then the stored constant $m$ is increased, otherwise the stored constant $m$ is decreased.

9. The method according to claim 8, wherein when the driving condition is such that the vehicle is accelerating or decelerating and the vehicle speed $V$ is superior or equal to the second threshold speed, then if the absolute value of the calculated acceleration $A_C$ is superior to the absolute value of the vehicle acceleration $A_V$ then the stored constant $a_1$ is increased, otherwise the stored constant $a_1$ is decreased.

10. The method according to claim 9, wherein a friction value is calculated from $a1$.

11. The method according to anyone of claims 8 to 10, wherein the second threshold speed depends on engine speed and/or on an acceleration or deceleration condition of the vehicle.

12. Use of the method according to anyone of the preceding claims in a method for controlling the powertrain system of an internal combustion engine vehicle, of a hybrid vehicle or of an electric vehicle.

13. Use of the method according to anyone of the preceding claims in a method for controlling transmission gear shifts in an automatic transmission vehicle, wherein a gear shift point depends on a road slope angle calculated on the basis of a variation of $a_0$.

**Patentansprüche**

1. Methode zur Bestimmung einer Fahrwiderstandskraft, die einem Fahrzeug entgegenwirkt, wobei die Methode den Schritt zum
   Bestimmen einer Fahrgeschwindigkeit $V$, einer Fahrzeugbeschleunigung $A_V$ und einer Fahrzeugantriebskraft $F_D$ umfasst;
wobei die Methode **gekennzeichnet ist durch** die Schritte zum:

> Berechnen der Fahrwiderstandskraft $F_{RL}$ gemäß $F_{RL} = a_0 + a_1 \cdot V + a_2 \cdot V^2$, wobei $a_0$, $a_1$ und $a_2$ gespeicherte Konstanten sind;
> Berechnen einer berechneten Beschleunigung $A_C$ gemäß $A_C = (F_D - F_{RL})/m$, wobei $m$ eine gespeicherte Konstante ist, die die Fahrzeugmasse darstellt; und
> Vergleichen von $A_V$ mit $A_C$ und, falls $A_V$ und $A_C$ nicht übereinstimmen, Aktualisieren von einer der gespeicherten Konstanten in einer solchen Weise, dass die Differenz zwischen $A_C$ und $A_V$ zumindest teilweise reduziert wird, wobei die zu aktualisierende gespeicherte Konstante von einer Fahrbedingung abhängt.

2. Methode nach Anspruch 1, wobei eine der gespeicherten Konstanten auch aktualisiert wird, wenn $A_C$ mit $A_V$ übereinstimmt.

3. Methode nach Anspruch 1 oder 2, wobei, wenn die Fahrbedingung so ist, dass das Fahrzeug mit einer im Wesentlichen konstanten Geschwindigkeit fährt und die Fahrgeschwindigkeit $V$ niedriger ist als eine erste Grenzgeschwindigkeit, dann, wenn die berechnete Beschleunigung $A_C$ höher ist als die Fahrzeugbeschleunigung $A_V$, die gespeicherte Konstante $a_0$ erhöht wird und andernfalls die gespeicherte Konstante $a_0$ verringert wird.

4. Methode nach Anspruch 3, wobei ein Winkel der Straßenneigung basierend auf einer Veränderung von $a_0$ berechnet wird.

5. Methode nach Anspruch 3 oder 4, wobei, wenn die Fahrbedingung so ist, dass das Fahrzeug mit einer im Wesentlichen konstanten Geschwindigkeit fährt und die Fahrgeschwindigkeit $V$ höher ist als die erste Grenzgeschwindigkeit oder dieser gleicht, dann, wenn die berechnete Beschleunigung $A_C$ höher ist als die Fahrzeugbeschleunigung $A_V$, die gespeicherte Konstante $a_2$ erhöht wird und andernfalls die gespeicherte Konstante $a_2$ verringert wird.

6. Methode nach Anspruch 5, wobei ein Luftwiderstandswert aus $a_2$ berechnet wird.

7. Methode nach irgendeinem der Ansprüche 3 bis 6, wobei die erste Grenzgeschwindigkeit von der Drehzahl des Verbrennungsmotors abhängt.

8. Methode nach irgendeinem der vorangehenden Ansprüche, wobei, wenn die Fahrbedingung so ist, dass das Fahrzeug beschleunigt oder verzögert wird und die Fahrgeschwindigkeit $V$ niedriger ist als eine zweite Grenzgeschwindigkeit, dann, wenn der Absolutwert der berechneten Beschleunigung $A_C$ höher ist als der Absolutwert der Fahrzeugbeschleunigung $A_V$, die gespeicherte Konstante $m$ erhöht wird und andernfalls die gespeicherte Konstante $m$ verringert wird.

9. Methode nach Anspruch 8, wobei, wenn die Fahrbedingung so ist, dass das Fahrzeug beschleunigt oder verzögert wird und die Fahrgeschwindigkeit $V$ höher ist als die zweite Grenzgeschwindigkeit oder dieser gleicht, dann, wenn der Absolutwert der berechneten Beschleunigung $A_C$ höher ist als der Absolutwert der Fahrzeugbeschleunigung $A_V$, die gespeicherte Konstante $a_1$ erhöht wird und andernfalls die gespeicherte Konstante $a_1$ verringert wird.

10. Methode nach Anspruch 9, wobei ein Reibungswert aus $a_1$ berechnet wird.

11. Methode nach irgendeinem der Ansprüche 8 bis 10, wobei die zweite Grenzgeschwindigkeit von der Drehzahl des Verbrennungsmotors und/oder einer Beschleunigungs- oder Verzögerungsbedingung des Fahrzeugs abhängt.

12. Verwendung der Methode nach irgendeinem der vorangehenden Ansprüche in einer Methode zur Regelung des Triebstrangsystems eines Fahrzeugs mit Verbrennungsmotor, eines Hybridfahrzeugs oder eines Elektrofahrzeugs.

13. Verwendung der Methode nach irgendeinem der vorangehenden Ansprüche in einer Methode zur Regelung der Getriebeschaltvorgänge in einem Fahrzeug mit Automatik-Getriebe, wobei ein Schaltpunkt der Gänge von einem Straßenneigungswinkel abhängt, der basierend auf einer Veränderung von $a_0$ berechnet wird.

## Revendications

1. Procédé d'estimation d'une force de résistance au roulement rencontrée par un véhicule, le procédé comprenant les étapes consistant à déterminer une vitesse de véhicule $V$, une accélération de véhicule $A_V$ et une force motrice de véhicule $F_D$;
ledit procédé étant **caractérisé par** les étapes consistant à :

> calculer la force de résistance au roulement $F_{RL}$ conformément à $F_{RL} = a_0 + a_1 \cdot V + a_2 \cdot V^2$, où $a_0$, $a_1$ et $a_2$ sont des constantes stockées;

> calculer une accélération calculée $A_C$ conformément à $A_C = (F_D - F_{RL})/m$, où $m$ est une constante stockée représentative de la masse du véhicule; et

comparer $A_V$ avec $A_C$ et, au cas où $A_V$ et $A_C$ ne correspondraient pas, mettre à jour l'une des constantes stockées de façon à réduire au moins partiellement la différence entre $A_C$ et $A_V$, la constante stockée devant être mise à jour dépendant d'une condition de conduite.

2. Procédé selon la revendication 1, dans lequel l'une des constantes stockées est également mise à jour lorsque $A_C$ correspond à $A_V$.

3. Procédé selon la revendication 1 ou 2, dans lequel lorsque la condition de conduite est telle que le véhicule roule à une vitesse essentiellement constante et que la vitesse du véhicule $V$ est inférieure à une première vitesse de seuil, si l'accélération calculée $A_C$ est supérieure à l'accélération du véhicule $A_V$, la constante stockée $a_0$ sera alors augmentée, sinon la constante stockée $a_0$ sera diminuée.

4. Procédé selon la revendication 3, dans lequel un angle d'inclinaison de la route est calculé sur la base d'une variation de $a_0$.

5. Procédé selon la revendication 3 ou 4, dans lequel lorsque la condition de conduite est telle que le véhicule roule à une vitesse essentiellement constante et que la vitesse du véhicule $V$ est supérieure ou égale à la première vitesse de seuil, si l'accélération calculée $A_C$ est supérieure à l'accélération du véhicule $A_V$, la constante stockée $a_2$ sera alors augmentée, sinon la constante stockée $a_2$ sera diminuée.

6. Procédé selon la revendication 5, dans lequel une valeur de traînée aérodynamique est calculée à partir de $a_2$.

7. Procédé selon l'une quelconque des revendications 3 à 6, dans lequel la première vitesse de seuil dépend de la vitesse du moteur.

8. Procédé selon l'une quelconque des revendications précédentes, dans lequel lorsque la condition de conduite est telle que le véhicule accélère ou décélère et que la vitesse du véhicule $V$ est inférieure à une deuxième vitesse de seuil, si la valeur absolue de l'accélération calculée $A_C$ est supérieure à la valeur absolue de l'accélération du véhicule $A_V$, la constante stockée $m$ sera alors augmentée, sinon la constante stockée $m$ sera diminuée.

9. Procédé selon la revendication 8, dans lequel lorsque la condition de conduite est telle que le véhicule accélère ou décélère et que la vitesse du véhicule $V$ est supérieure ou égale à la deuxième vitesse de seuil, si la valeur absolue de l'accélération calculée $A_C$ est supérieure à la valeur absolue de l'accélération du véhicule $A_V$, la constante stockée $a_1$ sera alors augmentée, sinon la constante stockée $a_1$ sera diminuée.

10. Procédé selon la revendication 9, dans lequel une valeur de frottement est calculée à partir de $a_1$.

11. Procédé selon l'une quelconque des revendications 8 à 10, dans lequel la deuxième vitesse de seuil dépend de la vitesse du moteur et/ou d'une condition d'accélération ou de décélération du véhicule.

12. Utilisation du procédé selon l'une quelconque des revendications précédentes dans un procédé de commande du système motopropulseur d'un véhicule à moteur à combustion interne, d'un véhicule hybride ou d'un véhicule électrique.

13. Utilisation du procédé selon l'une quelconque des revendications précédentes dans un procédé de commande des changements de vitesse de transmission dans un véhicule à transmission automatique, où un point de changement de vitesse dépend d'un angle d'inclinaison de la route calculé sur la base d'une variation de $a_0$.

Start

measure vehicle speed V — 10

determine vehicle acceleration $A_V$
determine driving force $F_D$ — 12

Calculate: $F_{RL} = a_0 + a_1 \cdot V + a_2 \cdot V^2$
Caculate: $A_C = (F_D - F_{RL})/m$ — 14

$|A_V| < A_{THRESHOLD}$? — 16
- TRUE (constant speed) — 18
- FALSE (accelerating or decelerating) — 20

$V < V_{THRESHOLD}^C$? — 22
- TRUE (low speed)
- FALSE (high speed)

$A_C > A_V$?
- TRUE: Increase $a_0$ — 24
- FALSE: Decrease $a_0$ — 26

$A_C > A_V$? — 28
- TRUE: Increase $a_2$ — 30
- FALSE: Decrease $a_2$ — 32

$V < V_{THRESHOLD}^{AD}$?
- TRUE (low speed)
- FALSE (high speed)

$|A_C| > |A_V|$? — 34
- TRUE: Increase m — 36
- FALSE: Decrease m — 38

$|A_C| > |A_V|$? — 40
- TRUE: Increase $a_1$ — 42
- FALSE: Decrease $a_1$ — 44

End